# EUROPÄISCHE PATENTSCHRIFT

(11) **EP 3 036 529 B1**
(45) Veröffentlichungstag und Bekanntmachung des Hinweises auf die Patenterteilung: **17.06.2020**
(21) Anmeldenummer: 14766541.8
(22) Anmeldetag: 07.08.2014
(51) Int. Cl.: G01N 21/64, G01K 11/20

(54) **VERFAHREN ZUR BESTIMMUNG EINER VERÄNDERLICHEN EINER PROBE**
METHOD FOR DETERMINING A VARIABLE OF A SAMPLE
PROCÉDÉ DE DÉTERMINATION D'UNE VARIABLE D'UN ÉCHANTILLON

(30) Priorität: 21.08.2013 DE 102013109010
(43) Veröffentlichungstag der Anmeldung: 29.06.2016
(73) Patentinhaber: PreSens Precision Sensing GmbH, 93053 Regensburg (DE)
(72) Erfinder: LIEBSCH, Gregor, 93083 Obertraubling (DE); ANDRZEJEWSKI, Damian, 93161 Sinzing (DE)
(74) Vertreter: Reichert & Lindner Partnerschaft Patentanwälte
(86) Internationale Anmeldenummer: PCT/IB2014/063765
(87) Internationale Veröffentlichungsnummer: WO 2015/025243

(56) Entgegenhaltungen:
- DE-A1-102011 055 272
- US-A- 5 304 809

## Beschreibung

Die vorliegende Erfindung betrifft ein Verfahren zur Bestimmung einer Veränderlichen einer Probe, spezieller ein Verfahren, bei dem die Veränderliche der Probe aus dem Lumineszenzverhalten einer Sensorsubstanz bestimmt wird.

Die deutsche Offenlegungsschrift DE 196 34 873 A1 beschreibt eine Vorrichtung und ein Verfahren zur Unterscheidung von mindestens zwei unterschiedlich fluoreszierenden Arten von Molekülgruppen, die an Analytmoleküle gebunden sind, durch zeitaufgelöste Fluoreszenzmessung. Dabei wird eine Lichtquelle zur Beleuchtung eines Probevolumens für ein Zeitintervall T₁ aktiviert, anschließend nach einem Zeitintervall T₂ ein Detektor für eine Zeit T₃ aktiviert. Aus dem Zeitverlauf der im Zeitintervall T₃ aufgenommenen Detektorsignale wird ermittelt, welche der mindestens zwei Molekülgruppen im Probevolumen enthalten ist.

Das US-Patent US 5,315,993 offenbart eine Sonde und eine Vorrichtung zur Überwachung einer Vielzahl von Parametern in einer Umgebung unter Ausnutzung einer Lumineszenz-Erscheinung. Ein Lumineszenz-Mittel wird hierzu mit einer Vielzahl von Anregungslichtkomponenten, deren Amplituden mit bestimmten Modulationsfrequenzen zeitmoduliert werden, bestrahlt. Die Lumineszenz-Antwort umfasst eine Vielzahl von Lumineszenzlichtkomponenten, welche den Modulationen des Anregungslichts entsprechende Modulationen aufweisen. Über eine Fouriertransformation ergeben sich spektrale Daten, welche in Modellgleichungen eingehen, aus denen dann unter anderem die Lebensdauer einzelner Lumineszenzlichtkomponenten bestimmt werden kann.

Die deutsche Offenlegungsschrift DE 101 52 994 A1 beschreibt ein Verfahren zur gleichzeitigen optischen Bestimmung von pH-Wert und Gelöstsauerstoff einer überwiegend wässrigen Probe. Dabei wird eine einzige Sensormatrix verwendet, die mindestens zwei Indikatorfarbstoffe enthält, die für die Messgrößen pH-Wert und Gelöstsauerstoff zumindest ein differenzierbares optisches Signal liefern. In einer offenbarten Ausprägung des Verfahrens werden pH-Wert und Gelöstsauerstoff durch die Messung der Abklingzeit einer Fluoreszenzantwort der Indikatoren nach pulsförmiger Anregung bestimmt.

Die europäische Patentanmeldung EP 0 442 060 A2 betrifft eine ratiometrische Lumineszenz-Messung zur Bestimmung einer Veränderlichen, beispielsweise der Konzentration eines Stoffes. Hierzu werden ein erstes lumineszierendes Material mit einem ersten Absorptionsband und ein zweites lumineszierendes Material mit einem zweiten Absorptionsband verwendet; das erste und das zweite Absorptionsband überlappen nicht vollständig. In einander abwechselnden ersten und zweiten Beleuchtungsintervallen werden die lumineszierenden Materialien mit einem ersten Anregungslicht innerhalb des ersten, aber außerhalb des zweiten Absorptionsbandes, bzw. mit einem zweiten Anregungslicht innerhalb des zweiten, aber außerhalb des ersten Absorptionsbandes beleuchtet. Die entsprechend während erster bzw. zweiter Antwortintervalle detektierten Lumineszenzantworten des ersten bzw. zweiten lumineszierenden Materials werden ausgewertet und zur Bestimmung der Veränderlichen herangezogen.

Das US-Patent US 5,304,809 betrifft eine Reihe von Messverfahren, bei denen eine Größe, etwa eine Temperatur, aus einem Lumineszenzverhalten bestimmt wird, das mit einer CCD-Kamera erfasst wird. Bei einem dieser Messverfahren erfolgt die Anregung der Lumineszenz durch eine Folge von Pulsen, bei der der zeitliche Abstand aufeinanderfolgender Pulse zwischen zwei Werten alterniert.

Der Artikel "Luminescence Lifetime Imaging of Oxygen, pH, and Carbon Dioxide Distribution Using Optical Sensors" von G. Liebsch, I. Klimant, B. Frank, G. Holst und O.S. Wolfbeis in Applied Spectroscopy 54, Nummer 4 (2000), Seite 548 bis 559, beschreibt die Bestimmung diverser Veränderlicher für Proben in den Kavitäten einer Mikrotiterplatte durch die Abhängigkeit der Fluoreszenzlebensdauer von als Sensor verwendeten Materialien von der jeweiligen Veränderlichen. Die Fluoreszenzlebensdauer wird wie folgt ermittelt: die Fluoreszenz wird durch einen Lichtpuls angeregt, nach dessen Ende wird während zwei zeitlich beabstandeten Intervallen bevorzugt gleicher Zeitdauer jeweils die Fluoreszenzantwort der Sensoren aufintegriert. Aus dem Quotienten der so erhaltenen Integralwerte wird die Fluoreszenzlebensdauer bestimmt. Gegenüber rein intensitätsbasierten Methoden hat diese auf einem Quotienten von Messgrößen beruhende, ratiometrische Methode den Vorteil, von den lokalen Absolutwerten der Anregungsenergie praktisch unabhängig zu sein.

Der Artikel "Fluorescent Imaging of pH with Optical Sensors Using Time Domain Dual Lifetime Referencing" von G. Liebsch, I. Klimant, C. Krause und O.S. Wolfbeis in Analytical Chemistry Vol. 73, No. 17, September 1, 2001, Seiten 4354 bis 4363 betrifft die Bestimmung der pH-Verteilung in Mikrotiterplatten und auf einer Oberfläche. Hierzu wird eine Kombination zweier lumineszierender Materialien, welche zueinander in einem festen Mengenverhältnis stehen, verwendet: ein fluoreszierendes Material, dessen Fluoreszenzabklingdauer vom pH-Wert abhängt, und ein phosphoreszierendes Material, dessen Phosphoreszenzabklingdauer pH-unabhängig ist. Die lumineszierenden Materialien werden durch Beleuchtung angeregt, und während der Anregungsdauer wird innerhalb eines ersten Intervalls die kombinierte Fluoreszenz- und Phosphoreszenzantwort der Materialien aufintegriert. Unmittelbar nach Ende der Anregung wird die Aufzeichnung der Lumineszenzantwort der Materialien für eine Zeitspanne unterbrochen, welche lang genug ist, die Fluoreszenz praktisch vollständig abklingen zu lassen. Anschließend wird während eines zweiten Zeitintervalls, das bevorzugt ebenso lang ist, wie das erste Intervall, die Phosphoreszenzantwort des phosphoreszierenden Materials aufintegriert. Aus dem Quotienten der beiden erhaltenen Integralwerte kann letztlich auf den pH-Wert geschlossen werden.

Die deutsche Offenlegungsschrift DE 10 2011 055 272 A1 beschreibt ein Verfahren zur Bestimmung wenigstens eines Parameters zu einem System, wobei der wenigstens eine Parameter von mindestens einer Relaxationszeit des Systems abhängt. Das System wird durch eine erste Folge von elektromagnetischen Anregungspulsen angeregt, welche einen ersten definierten zeitlichen Pulsabstand zwischen aufeinanderfolgenden Anregungspulsen aufweist. Die Antwort des Systems auf die erste Folge von Anregungspulsen wird kontinuierlich über die Zeit integriert, und so ein erstes Antwort-Signal erzeugt. Ebenso wird durch kontinuierliche Zeitintegration zumindest einer zweiten Antwort des Systems ein zweites Antwort-Signal erzeugt. Unter Einbeziehung des ersten Antwort-Signals und des zumindest einen zweiten Antwort-Signals wird der wenigstens eine Parameter bestimmt. Bevorzugt involviert dies die Bildung eines Verhältnisses aus dem ersten und mindestens einem zweiten Antwort-Signal. Das System kann ein Objekt und ein sensorisches Mittel umfassen, welches zumindest eine Relaxationszeit aufweist, die von einer Veränderlichen des Objekts abhängt. Der Parameter, und damit gegebenenfalls die Veränderliche, können ortsaufgelöst bestimmt werden.

Lumineszenzbasierte Messverfahren sind für den Nachweis und die quantitative Bestimmung einer Vielzahl von Analyten bekannt. Beruht das Verfahren auf der Intensität der Lumineszenzerscheinung, so ist eine reproduzierbare Beleuchtung der untersuchten Probe, bei flächiger Beleuchtung einer ausgedehnten Probe auch die räumliche Homogenität der Beleuchtungsstärke, von entscheidender Bedeutung. Andere Untersuchungsmethoden beruhen auf der Abklingdauer der Lumineszenzerscheinung und nutzen aus, dass diese Abklingdauer bei etlichen lumineszenten Stoffen von bestimmten Veränderlichen der Umgebung abhängt; Beispiele für solche Veränderliche sind pH-Wert, Konzentration eines Stoffes, oder Temperatur. Bei derartigen Untersuchungsmethoden, für welche sich im oben genannten Stand der Technik Beispiele finden, wird die Lumineszenzantwort eines als Sensormaterial verwendeten Stoffes über definierte Zeitintervalle aufintegriert, und die so erhaltenen Integralwerte werden ins Verhältnis gesetzt. Durch diese Quotientenbildung, weswegen man die Methoden auch als ratiometrisch klassifiziert, wird die Abhängigkeit von Schwankungen der Beleuchtungsstärke deutlich reduziert. Bei diesen Methoden wird nicht zwangsläufig explizit die Abklingdauer oder Relaxationszeit der Lumineszenzerscheinung bestimmt, sondern häufig stattdessen ein Parameter, der von der Relaxationszeit abhängt, beispielsweise der Quotient der genannten Integralwerte. Ist eine jeweils zu bestimmende Veränderliche gegen einen entsprechenden jeweiligen Parameter kalibriert, kann der Wert der Veränderlichen aus der Lumineszenzantwort bestimmt werden. Eine Schwierigkeit bei diesen Methoden besteht jedoch darin, die definierten Zeitintervalle für die Integration der Lumineszenzantwort in der Messanordnung hinreichend präzise zu realisieren. Hierzu ist ein gewisser technischer Aufwand erforderlich, welcher mit entsprechenden Kosten verbunden ist. Ferner ist die verwendete Technik sehr empfindlich, was die Verwendung insbesondere als tragbare Geräte für den Feldeinsatz problematisch macht, insbesondere wiederum unter Kostengesichtspunkten.

Aufgabe der Erfindung ist es, ein Verfahren bereitzustellen, das es ermöglicht, eine Veränderliche einer Probe in einfacher, insbesondere in der Durchführung unaufwändiger, Weise zu bestimmen.

Die Aufgabe wird gelöst durch ein Verfahren gemäß Anspruch 1.

Zur Durchführung des erfindungsgemäßen Verfahrens wird zunächst ein Kontakt zwischen mindestens einer Sensorsubstanz und der Probe hergestellt. Jede hierbei verwendete Sensorsubstanz weist ein Lumineszenzverhalten mit einer Relaxationszeit auf, welche von der zu bestimmenden Veränderlichen der Probe abhängt. Lumineszenz umfasst zumindest Phosphoreszenz und Fluoreszenz. Dabei ist der bereits erwähnte Kontakt zwischen der mindestens einen Sensorsubstanz und der Probe, für den Fachmann offenkundig, von solcher Art, dass die Sensorsubstanz auf die zu bestimmende Veränderliche der Probe reagieren kann. Handelt es sich bei der Veränderlichen beispielsweise um eine Temperatur der Probe, so muss ein Wärmeübergang zwischen der Probe und der Sensorsubstanz möglich sein. Handelt es sich bei der zu bestimmenden Veränderlichen beispielsweise um die Konzentration eines Stoffes, so muss ein entsprechender Stoffkontakt zwischen der Probe und der Sensorsubstanz möglich sein, das heißt, Moleküle der Sensorsubstanz müssen mit Molekülen des Stoffes zusammentreffen, beispielsweise um Energie zwischen den Molekülen zu übertragen oder um eine chemische Reaktion einzugehen.

Die Sensorsubstanz wird sodann durch ein elektromagnetisches Anregungssignal zur Lumineszenz angeregt. Das elektromagnetische Anregungssignal weist einen vorgegebenen Zeitverlauf auf. Dabei zeigt das Anregungssignal zeitlich aufeinanderfolgende Signalmaxima, wobei der zeitliche Abstand aufeinanderfolgender Signalmaxima über die Zeitdauer des Anregungssignals abnimmt oder zunimmt. Die Abnahme beziehungsweise Zunahme des zeitlichen Abstandes aufeinanderfolgender Signalmaxima ist erfindungsgemäß monoton, besonders bevorzugt streng monoton. Bevorzugt entsprechen die Signalmaxima alle dem gleichen Wert des Anregungssignals, innerhalb fachspezifischer Toleranzen.

Das erfindungsgemäße Verfahren kann im Grundsatz stets angewandt werden, wenn es eine Sensorsubstanz gibt, die durch elektromagnetische Strahlung dazu angeregt werden kann, eine Lumineszenzerscheinung zu zeigen, sofern diese Lumineszenzerscheinung eine Relaxationszeit aufweist, die von der zu bestimmenden Veränderlichen der Probe abhängt. Der Wellenlängenbereich der zur Anregung verwendeten elektromagnetischen Strahlung bestimmt sich dann aus den Erfordernissen der jeweiligen Sensorsubstanz, d.h. es ist der Wellenlängenbereich zu verwenden, der die zur Bestimmung der Veränderlichen genutzte Lumineszenz der Sensorsubstanz anregen kann. Dem Fachmann ist dabei bekannt, dass der Wellenlängenbereich vorteilhaft so begrenzt wird, dass weitere Effekte, welche die Bestimmung der Veränderlichen stören, etwa durch zusätzliche Lumineszenzerscheinungen oder rasche Zerstörung von Sensorsubstanz oder Probe, vermieden werden. Die Erfindung ist daher nicht auf einen bestimmten Teilbereich des elektromagnetischen Spektrums beschränkt; in der überwiegenden Zahl der Fälle wird elektromagnetische Strahlung aus dem Bereich von Infrarot- bis Ultraviolettlicht verwendet, das erfindungsgemäße Verfahren kann aber beispielsweise auch im Bereich von Radiowellen, Mikrowellen, Terahertzstrahlung, Röntgen- oder Gammastrahlung eingesetzt werden. Das erfindungsgemäße Verfahren ist ebensowenig darauf beschränkt, dass die elektromagnetische Strahlung der Lumineszenzantwort der Sensorsubstanz einem bestimmten Teilbereich des elektromagnetischen Spektrums entstammt; je nach verwendeter Sensorsubstanz, zu bestimmender Veränderlicher und zur Anregung benutzter Strahlung können die auftretenden Lumineszenzwellenlängenbereiche verschieden sein.

Der Zeitverlauf der Lumineszenzantwort der mindestens einen Sensorsubstanz auf das Anregungssignal wird erfasst und während der Dauer des Anregungssignals über aufeinanderfolgende Zeitintervalle vorgegebener konstanter Dauer integriert. Das Ergebnis der Integration über ein Zeitintervall liefert einen Wert eines weiteren Signals, das fortan als Ausgangssignal bezeichnet wird. Aufeinanderfolgende Werte des Ausgangssignals, entsprechend jeweils der Integration über eines der aufeinanderfolgenden Zeitintervalle, ergeben dann einen Zeitverlauf des Ausgangssignals. Zur Erfassung der Lumineszenzantwort wird üblicherweise ein Detektor verwendet, der Lumineszenzstrahlung von der mindestens einen Sensorsubstanz empfängt. Durch den Detektor wird gemeinhin ein elektrisches Signal aus dem empfangenen Lumineszenzlicht generiert. Die zuvor angesprochene Integration kann dann durch Integration dieses elektrischen Signals realisiert werden. Je nach Art des Detektors kann aber auch eine Akkumulation des erfassten Lumineszenzlichts über ein bestimmtes Zeitintervall innerhalb des Detektors erfolgen, und durch den Detektor ein elektrisches Signal generiert werden, welches ein Maß für die gesamte innerhalb des Zeitintervalls empfangene Energie des Lumineszenzlichtes ist. Auch diese Akkumulation kann die Integration darstellen. Längere Zeitintervalle der Integration können dann durch Summation über die Werte des aus der Akkumulation vom Detektor generierten Signals erzielt werden. Die Dauer eines Integrations-Zeitintervalls ist zumindest so groß, dass die einem Signalmaximum des Anregungssignals zuzuordnende Lumineszenzantwort der Sensorsubstanz bei der Integration erfasst wird. Bei Detektoren mit einer Reaktionszeit, die größer als der Abstand aufeinanderfolgender Signalmaxima ist, wird innerhalb eines Integrations-Zeitintervalls die Lumineszenzantwort auf eine Vielzahl von Signalmaxima des Anregungssignals erfasst. Dies gilt selbstverständlich auch, wenn die Dauer der Integrations-Zeitintervalle durch einen Anwender des Verfahrens auf einen entsprechend langen Wert gesetzt wird.

Ist das Anregungssignal so, dass der Zeitabstand aufeinanderfolgender Signalmaxima abnimmt, so wird ein Wert dieses Zeitabstandes erreicht und im Weiteren auch unterschritten, bei dem ein vollständiges Abklingen der Lumineszenz der Sensorsubstanz zwischen aufeinanderfolgenden Signalmaxima nicht mehr möglich ist. Dies führt zum Auftreten einer Stufe oder eines Sprunges zu einem höheren Wert im Ausgangssignal.

Ist das Anregungssignal so, dass der Zeitabstand aufeinanderfolgender Signalmaxima zunimmt, so wird ein Wert dieses Zeitabstandes erreicht und im Weiteren auch überschritten, bei dem ein vollständiges Abklingen der Lumineszenz der Sensorsubstanz zwischen aufeinanderfolgenden Signalmaxima möglich ist. Dies führt zum Auftreten einer Stufe oder eines Sprunges zu einem niedrigeren Wert im Ausgangssignal. Unter vollständigem Abklingen der Lumineszenz wird hierbei stets verstanden, dass das Lumineszenzsignal auf einen Wert abgefallen ist, der sich nicht mehr detektieren lässt, weil er etwa das Detektorrauschen nicht überschreitet.

Aus der Lage dieser Stufe im Zeitverlauf des Ausgangssignals, das heißt, aus dem Zeitpunkt des Auftretens der Stufe im Ausgangssignal, bezogen auf den Zeitverlauf des Anregungssignals, kann auf den Wert der zu bestimmenden Veränderlichen der Probe geschlossen werden.

Abseits der eben erwähnten Stufen ist das Ausgangssignal mitunter, aber nicht notwendigerweise, konstant. Ist der Detektor schnell genug, und sind die Integrations-Zeitintervalle kurz genug, um für jedes einzelne Signalmaximum des Anregungssignals einen Wert des Ausgangssignals zu generieren, so wird in jedem Integrations-Zeitintervall im Grunde über den gleichen Zeitverlauf der Lumineszenzantwort integriert. Für jedes Integrations-Zeitintervall ergibt sich dann der gleiche Wert des Ausgangssignals. Bei langsameren Detektoren und / oder längeren Integrations-Zeitintervallen führt eine Verringerung des Abstandes aufeinanderfolgender Signalmaxima dazu, dass im Verlauf des Anregungssignals mehr und mehr Signalmaxima mit zugehörigen Lumineszenzantworten innerhalb eines Integrations-Zeitintervalls liegen. Dies führt zu einem entsprechenden Anstieg des Ausgangssignals. Analog ergibt sich bei monoton über die Dauer des Anregungssignals zunehmenden Abständen zwischen den Signalmaxima des Anregungssignals eine Abnahme des Ausgangssignals. Dieser Anstieg beziehungsweise dieses Absinken sind jedoch deutlich von den zuvor genannten Stufen im Ausgangssignal verschieden. Diesen Unterschied kann man noch deutlicher werden lassen, wenn man anstatt des Ausgangssignals das Ausgangssignal dividiert durch die Anzahl der Signalmaxima pro Integrations-Zeitintervall für die weitere Auswertung verwendet. In diesem Fall sind die Werte des derart modifizierten Ausgangssignals abseits der Stufen konstant. Anstatt durch die Anzahl der Signalmaxima zu dividieren, kann man das Ausgangssignal auch durch die Gesamtenergie des Anregungssignals, welche in ein jeweiliges Integrations-Zeitintervall fällt, oder eine dazu proportionale Größe, dividieren.

Der definierte Zeitverlauf des Anregungssignals ist in Ausführungsformen dadurch bestimmt, dass das Anregungssignal ein frequenzmoduliertes Signal ist, bei dem die Frequenz über die Dauer des Anregungssignals monoton zunimmt oder abnimmt.

In einer anderen Ausprägung des Verfahrens handelt es sich bei dem Anregungssignal um eine Folge von Pulsen, welche sich dadurch auszeichnet, dass über die Zeitdauer des Anregungssignals die Pulsabstände abnehmen oder zunehmen. Beispielsweise kann jeder Pulsabstand um einen definierten absoluten Wert, etwa 0,5 Mikrosekunden, oder einen definierten relativen Wert, etwa 5 Prozent, kürzer oder länger sein als sein Vorgänger. Die Pulsdauern sind dabei bevorzugt konstant.

Der Zweck des vorgegebenen Zeitverlaufs des Anregungssignals, also etwa eines frequenzmodulierten Signals oder einer Pulsfolge mit wie oben dargelegt variierenden Pulsabständen, ist es, letztlich eine Sättigung der Lumineszenz der Sensorsubstanz zu erreichen bzw. einen Sättigungszustand zu verlassen. Sättigung meint hier einen stationären Zustand, bei dem sich im Mittel über einige Sequenzen aus Puls und folgendem Pulsabstand, beispielsweise 5 bis 10 Sequenzen, oder allgemeiner im Mittel über einige Signalmaxima, die Lumineszenzantwort nicht weiter ändert, also nicht weiter anwächst oder abfällt. Erreicht oder verlässt eine Sensorsubstanz die Sättigung, so tritt eine bereits oben angesprochene Stufe im Zeitverlauf des Ausgangssignals auf; beim Erreichen der Sättigung bedeutet die Stufe ein Anwachsen des Ausgangssignals, beim Verlassen der Sättigung bedeutet die Stufe ein Abfallen des Ausgangssignals.

Ist eine Sensorsubstanz mit einer bestimmten Relaxationszeit der Lumineszenzantwort gegeben, und wird diese Sensorsubstanz beispielsweise mit einer Pulsfolge angeregt, deren Pulsabstände im Zeitverlauf monoton abnehmen, so wird die Lumineszenzantwort innerhalb eines Pulsabstandes zunächst nicht mehr vollkommen abklingen, so dass in Reaktion auf weitere Pulse die Intensität der Lumineszenzantwort im Mittel anwächst und die Lumineszenzantwort der Sensorsubstanz schließlich die Sättigung erreicht. Mit dem Anwachsen der Lumineszenzantwort im Mittel erhöht sich auch das durch Integration über die Lumineszenzantwort erhaltene Ausgangssignal, so dass im Ausgangssignal eine Stufe auftritt. Hat die Lumineszenzantwort in diesem Beispiel die Sättigung erreicht, so hat das Ausgangssignal den Wert, der dem oberen, höherwertigen Ende, dieser Stufe entspricht.

Es sei darauf hingewiesen, dass die Relaxationszeit der Lumineszenzantwort der Sensorsubstanz auch der Ansprechzeit der Sensorsubstanz auf die Anregung der Lumineszenz entspricht. Unter der "Relaxationszeit der Sensorsubstanz" ist die Relaxationszeit derjenigen Lumineszenzerscheinung der Sensorsubstanz gemeint, welche jeweils zur Bestimmung der Veränderlichen ausgenutzt wird; in der gleichen Bedeutung werden auch "Relaxationszeit der Lumineszenz" und "Relaxationszeit der Lumineszenzantwort" gebraucht.

Ist die Relaxationszeit der Sensorsubstanz kürzer als im vorstehend geschilderten Fall, so wird, bei gleicher Anregungspulsfolge, die Sättigung später erreicht. Entsprechend ergibt sich bei einer längeren Relaxationszeit ein früheres Eintreten in die Sättigung.

Hängt nun die Relaxationszeit der Lumineszenzantwort der Sensorsubstanz von der zu bestimmenden Veränderlichen der Probe ab, so kann daher aus dem Zeitpunkt des Auftretens einer Stufe im Ausgangssignal auf einen Wert der Veränderlichen geschlossen werden.

Einen ähnlichen Effekt wie bei einem Anregungssignal mit monoton über die Dauer des Anregungssignals abnehmenden Pulsabständen kann man erzielen, wenn man ein frequenzmoduliertes Anregungssignal verwendet, dessen Periodendauer im Zeitverlauf abnimmt.

Verwendet man stattdessen Anregungssignale mit monoton über die Dauer des Anregungssignals zunehmenden Pulsabständen oder zunehmenden Periodendauern, so tritt eine Stufe auf, wenn die Lumineszenzantwort der Sensorsubstanz die Sättigung verlässt.

Bei dem erfindungsgemäßen Verfahren wird der eingesetzte Sensor einer Anregungsenergie ausgesetzt, welche im Vergleich etwa zu Phasenmodulationsmethoden des Standes der Technik deutlich geringer ist. In der Folge ergibt sich ein geringeres Fotobleichen des Sensors, d.h. die Zersetzung der im Sensor verwendeten Sensorsubstanz, d.h. eines Lumineszenzfarbstoffs, durch das zur Anregung der Lumineszenz verwendete Licht ist vermindert.

Die Bestimmung eines Werts der Veränderlichen aus dem Zeitpunkt des Auftretens einer Stufe im Ausgangssignal erfolgt vorteilhaft durch Nutzung einer vorausgegangenen Kalibrierung, bei welcher beispielsweise zu einem festgelegten Anregungssignal für Proben mit bekannten Werten der zu bestimmenden Veränderlichen die jeweiligen Zeitpunkte des Auftretens einer Stufe bestimmt werden. Diese Informationen werden dann als Kalibrierdaten in zweckmäßiger Weise, etwa als Tabelle, zwischen den Messpunkten interpolierte Kurve, oder zwischen den Messpunkten interpolierende Funktion für das weitere Verfahren bereitgestellt. Dem Fachmann ist bekannt, dass eine entsprechende Auswertung einer Messung unter Einbeziehung der Kalibrierung auch automatisiert durch eine Datenverarbeitungseinrichtung erfolgen kann. Die Kalibrierung kann durch den Anwender des Verfahrens vor einer eigentlichen Messung erfolgen, oder aber durch den Hersteller der Sensorsubstanz oder zugehöriger Messvorrichtungen. Bei gleichem Wert der Veränderlichen tritt für verschiedene Anregungssignale eine Stufe im Ausgangssignal im Allgemeinen zu verschiedenen Zeitpunkten bezogen auf den Zeitverlauf des jeweiligen Anregungssignals auf. Daher gilt eine Kalibrierung immer nur für den festgelegten Zeitverlauf des Anregungssignals, für welchen die Kalibrierung vorgenommen wurde. Die für das Verfahren relevanten Merkmale des Zeitverlaufs des Anregungssignals sind die Zeitabstände zwischen aufeinanderfolgenden Signalmaxima beziehungsweise die Pulsabstände sowie die Pulsdauern. Die Zeitpunkte des Auftretens der Stufen sind dagegen von der Intensität des Anregungssignals weitgehend unabhängig.

Der oben bereits angesprochene erforderliche Kontakt zwischen der Probe und der mindestens einen Sensorsubstanz kann in einfacher Weise dadurch erzielt werden, dass die Sensorsubstanz mit der Probe vermischt wird.

Alternativ kann die mindestens eine Sensorsubstanz an oder in einem Träger fixiert werden, und dieser Träger kann in die Probe eingebracht werden. Der Träger kann beispielsweise an einer Wand eines Probenbehälters angebracht werden, wobei diese Wand für die bei dem erfindungsgemäßen Verfahren genutzten Wellenlängen elektromagnetischer Strahlung, also für das Anregungssignal und die Lumineszenzantwort, transparent sein muss.

In einer Ausführungsform des erfindungsgemäßen Verfahrens werden mindestens zwei Sensorsubstanzen mit der Probe in Kontakt gebracht. Die Sensorsubstanzen unterscheiden sich dabei in der Relaxationszeit ihres jeweiligen Lumineszenzverhaltens. Bezogen auf den Zeitverlauf des Anregungssignals treten im Ausgangssignal Stufen zu unterschiedlichen Zeitpunkten auf. Insbesondere können die Relaxationszeiten mindestens zweier der Sensorsubstanzen von unterschiedlichen Veränderlichen der Probe abhängen. Die unterschiedlichen Zeitpunkte des Auftretens einer Stufe können in diesem Fall genutzt werden, um eine Stufe eindeutig einer Veränderlichen zuzuordnen.

Ebenso ist es denkbar, dass die Relaxationszeiten der mindestens zwei Sensorsubstanzen von derselben Veränderlichen abhängen, jedoch zwischen den Sensorsubstanzen Unterschiede bestehen hinsichtlich eines Wertebereichs dieser Veränderlichen, in dem sich eine Abhängigkeit des Lumineszenzverhaltens der jeweiligen Sensorsubstanz von der Veränderlichen zeigt. Auf diese Weise kann diese Ausprägung des erfindungsgemäßen Verfahrens benutzt werden, um einen größeren Wertebereich der zu bestimmenden Veränderlichen der Messung zugänglich zu machen. Unterscheiden sich in diesem Fall die Relaxationszeiten der einzelnen Sensorsubstanzen, so können die Unterschiede im Zeitpunkt des Auftretens einer Stufe im Ausgangssignal genutzt werden, um diese Stufe einer bestimmten Sensorsubstanz zuzuordnen. Dies kann insbesondere in Wertebereichen der Veränderlichen von Vorteil sein, in denen mehr als eine der verwendeten Sensorsubstanzen eine Abhängigkeit ihrer jeweiligen Relaxationszeit von der Veränderlichen zeigt, vor allem, wenn diese Abhängigkeiten im fraglichen Wertebereich unterschiedlich deutlich ausgeprägt sind. Vorteilhaft würde dann diejenige Stufe im Ausgangssignal herangezogen, die zu der Sensorsubstanz gehört, die im fraglichen Wertebereich die deutlichste Abhängigkeit von der Veränderlichen zeigt, um die Veränderliche dementsprechend mit der größten Genauigkeit messen zu können. Alternativ kann auch für jede der Sensorsubstanzen aus der ihr zugeordneten Stufe im Ausgangssignal ein Wert der Veränderlichen bestimmt werden, und das endgültige Resultat für den Wert der Veränderlichen daraus durch eine, gegebenenfalls gewichtete, Mittelung bestimmt werden.

Ein Beispiel hierfür ist ein kombinierter Spuren- und Gesamtbereichs-Sauerstoffsensor, der einerseits bei geringen Sauerstoffkonzentrationen nahe 0% O₂ eine hohe Auflösung zeigt, aber zugleich den Messbereich bis 100% O₂ abdecken kann. Vorteilhaft können hierbei zwei Lumineszenzfarbstoffe als Sensorsubstanzen verwendet werden, die durch die gleiche Anregungswellenlänge zur Lumineszenz angeregt werden können und die auch beide im gleichen Spektralbereich emittieren.

Es genügt in diesem Fall eine Anregungslichtquelle, beispielsweise LED, für beide Lumineszenzfarbstoffe, und es können gleiche optische Filter für beide Lumineszenzantworten verwendet werden.

Als Spurensensor, mit einer Nachweisgrenze von 1 ppb gelöstem O₂ bei 20°C und einem Messbereich bis 5% gelöstem O₂, können Farbstoffe aus der Klasse der Palladium-Porphyrine
verwendet werden. Die Anregungswellenlänge beträgt hier 400 nm, die Relaxationszeit variiert von 900 Mikrosekunden bei 0% O₂ bis zu 150 Mikrosekunden bei 5% O₂.

Als Gesamtbereichssensor, mit einer Nachweisgrenze von 15 ppb gelöstem O₂ bei 20°C und einem Messbereich bis zu 100% gelöstem O₂, können Farbstoffe aus der Klasse der Platin-Porphyrine verwendet werden. Die Anregungswellenlänge beträgt hier 400 nm, die Relaxationszeit variiert von 60 Mikrosekunden bei 0% O₂ bis zu 10 Mikrosekunden bei 100% O₂.

Die Messung kann in diesem Beispiel etwa mit Pulsen von 10 Mikrosekunden Dauer durchgeführt werden, wobei der Pulsabstand von 1000 Mikrosekunden bis zu 1 Mikrosekunde in Schritten von 1 Mikrosekunde reduziert wird.

Grundsätzlich kann die Lumineszenzantwort aller in Kontakt mit der Probe befindlichen Sensorsubstanzen mit einem gemeinsamen Detektor erfasst werden. Voraussetzung hierfür ist, dass der Detektor sensitiv auf die Wellenlängen aller auftretenden Lumineszenzantworten ist.

Ebenso kann zur Erfassung der Lumineszenzantworten aller Sensorsubstanzen mehr als ein Detektor verwendet werden. Jeder verwendete Detektor erfasst dann die Lumineszenzantworten eines Teils der Sensorsubstanzen, zumindest erfasst jeder Detektor die Lumineszenzantwort mindestens einer Sensorsubstanz. Die von den einzelnen Detektoren aus dem Lumineszenzlicht generierten Signale können dann summiert werden, um ein resultierendes Signal zu erhalten, welches dann weiter wie vorstehend beschrieben ausgewertet wird. Ebenso ist es möglich, die Signale von den einzelnen Detektoren getrennt auszuwerten.

Als Detektor kann insbesondere eine Fotodiode verwendet werden. Alternativ können auch bildgebende Sensoren auf CMOS- oder CCD-Basis zum Einsatz kommen. Das Verfahren kann für eine Vielzahl von Proben dadurch vorteilhaft parallel ausgeführt werden, indem jede Probe separat mit wenigstens einer Sensorsubstanz in Kontakt gebracht wird, die Sensorsubstanzen aller Proben gemeinsam einem elektromagnetischen Anregungssignal ausgesetzt werden, die Lumineszenzantwort jeder Probe separat erfasst und wie weiter oben bereits beschrieben ausgewertet wird. Dabei kann für jede Probe die gleiche Sensorsubstanz verwendet werden. Es ist aber auch denkbar, dass sich für mindestens zwei Proben die mit diesen Proben in Kontakt befindlichen Sensorsubstanzen unterscheiden. Insbesondere können für die einzelnen Proben unterschiedliche Veränderliche bestimmt werden. Die separate Erfassung der Lumineszenzantworten der Proben kann bei Verwendung eines bildgebenden Sensors als Detektor dadurch erfolgen, dass eine Bildsequenz einer Anordnung der Proben erfasst wird; in den Bildern der Sequenz kann jede Probe identifiziert werden, selbstverständlich automatisch oder durch Vorgabe zu der jeweiligen Probe gehörender Bildbereiche. Die Erfassung der Lumineszenzantwort der jeweiligen Probe geschieht dann über die zu den jeweiligen Bildbereichen gehörenden Pixelwerte.

In einer Weiterbildung des Verfahrens wird mindestens eine Sensorsubstanz mit der Probe in Kontakt gebracht, und die Sensorsubstanz wiederholt durch ein Anregungssignal der oben beschriebenen Art zu Lumineszenz angeregt. Die zugehörige Lumineszenzantwort wird jeweils erfasst. Es kann nun zu jeder Lumineszenzantwort ein Wert der zu bestimmenden Veränderlichen ermittelt werden, und ein resultierender Wert dieser Veränderlichen dann durch eine Mittelung über diese Werte zu den einzelnen Lumineszenzantworten bestimmt werden. Alternativ können die Zeitpunkte, zu denen in den zu den einzelnen Lumineszenzantworten ermittelten Ausgangssignalen Stufen auftreten, gemittelt werden, und ein resultierender Wert der Veränderlichen wird dann aus dem Ergebnis dieser Mittelung bestimmt.

Das erfindungsgemäße Verfahren kann zur Bestimmung einer jeglichen Veränderlichen eingesetzt werden, für welche es Sensorsubstanzen gibt, die ein von der zu bestimmenden Veränderlichen abhängiges Lumineszenzverhalten zeigen. Insbesondere kann es sich bei der Veränderlichen um eine Konzentration eines Stoffes, einen Druck, eine Temperatur, einen Partialdruck eines Gases oder einen pH-Wert handeln. Dem Fachmann ist somit aus dem Stand der Technik eine Fülle geeigneter Sensorsubstanzen bekannt, mit denen das erfindungsgemäße Verfahren durchgeführt werden kann.

Als Lichtquelle können im Stand der Technik zur Anregung optischer Sensoren bekannte Lichtquellen verwendet werden, beispielsweise LEDs oder Laser.

Im Folgenden wird an Hand von Ausführungsbeispielen und den beigefügten schematischen Zeichnungen die Erfindung noch weiter erläutert.
- **Figur 1**: zeigt ein Anregungssignal in Gestalt einer Pulsfolge;
- **Figur 2**: zeigt ein frequenzmoduliertes Signal, welches eine weitere mögliche Form eines Anregungssignals darstellt;
- **Figur 3**: zeigt einen Zeitverlauf eines Ausgangssignals;
- **Figur 4**: zeigt ein weiteres Beispiel für einen Zeitverlauf eines Ausgangssignals; und
- **Figur 5**: zeigt die Anordnung eines Trägers für eine Sensorsubstanz in einem Probenbehälter und einen beispielhaften Aufbau einer Vorrichtung zur Durchführung des erfindungsgemäßen Verfahrens.
- **Figur 6**: zeigt Integrations-Zeitintervalle in Relation zu Anregungspulsen und einer entsprechenden Lumineszenzantwort der Sensorsubstanz.
- **Figur 7**: zeigt ebenfalls Integrations-Zeitintervalle in Relation zu Anregungspulsen und einer entsprechenden Lumineszenzantwort der Sensorsubstanz, wobei die Integrations-Zeitintervalle länger sind als in Figur 6.

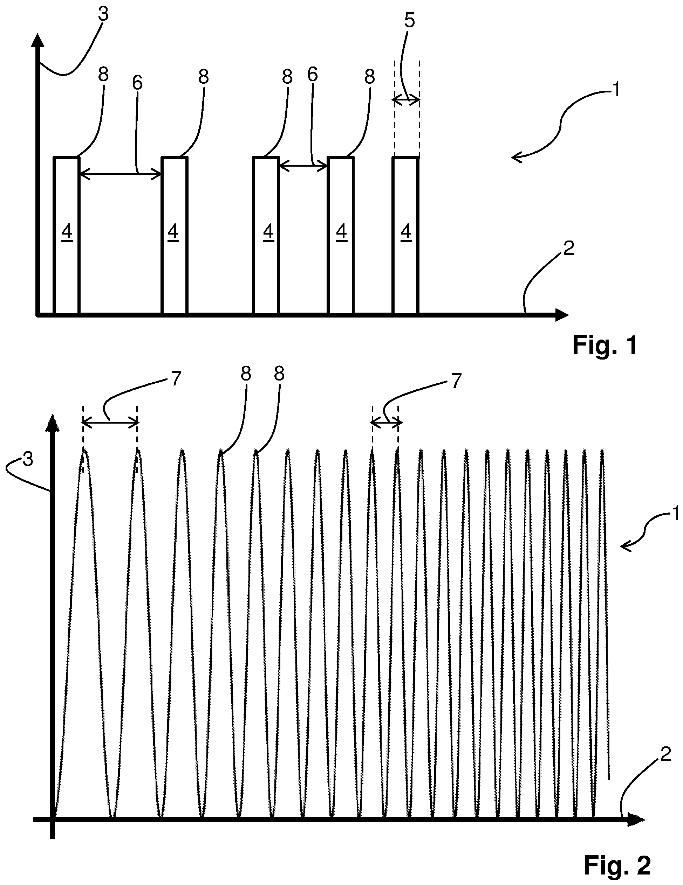

**Figur 1** zeigt ein Anregungssignal 1 in Gestalt einer Pulsfolge, wie sie zur Anregung einer Lumineszenz einer Sensorsubstanz in dem erfindungsgemäßen Verfahren verwendet werden kann. Auf der Abszisse 2 ist die Zeit, auf der Ordinate 3 ein Maß für die Stärke des Anregungssignals 1, etwa die Intensität des Anregungssignals 1, aufgetragen. Das Anregungssignal 1 besteht aus einer Folge von Pulsen 4, und ist gekennzeichnet durch Pulsdauern 5 und Pulsabstände 6. In der dargestellten Pulsfolge sind die Pulsdauern 5 über die Dauer der Pulsfolge konstant, die Pulsabstände 6 nehmen hingegen von Puls 4 zu Puls 4 monoton über die Dauer des Anregungssignals 1 ab. Die Summe aus Pulsdauer 5 und Pulsabstand 6 entspricht bei den hier gezeigten Rechteckpulsen dem zeitlichen Abstand aufeinanderfolgender Signalmaxima 8. Die abnehmenden Pulsabstände 6 bedeuten daher, dass die Abstände zwischen aufeinanderfolgenden Signalmaxima 8 des Anregungssignals 1 über die Dauer des Anregungssignals 1 monoton abnehmen.

Das erfindungsgemäße Verfahren wäre auch mit anderen Pulsformen als Rechteckpulsen, etwa Sägezahnpulsen oder gaussglockenförmigen Pulsen, durchführbar, wie dem Fachmann nach den vorstehenden Ausführungen offenkundig ist.

Die zu verwendenden Pulsdauern und Pulsabstände sind im Wesentlichen durch die Relaxationszeiten der verwendeten Sensorsubstanzen bestimmt. Typische Pulsdauern und Pulsabstände liegen im Bereich 100 Pikosekunden bis 2000 Mikrosekunden, ohne dass dies eine Einschränkung der Erfindung darstellt. Vorteilhaft sollte der größte verwendete Pulsabstand so groß sein, dass für die längste erwartete Relaxationszeit einer Lumineszenz ein vollständiges Abklingen dieser Lumineszenz möglich ist, zum Beispiel kann der längste verwendete Pulsabstand das drei- bis fünf-fache der längsten erwarteten Relaxationszeit betragen. Der kürzeste verwendete Pulsabstand sollte deutlich geringer sein als die kürzeste erwartete Relaxationszeit einer Lumineszenz, so dass durch das Anregungssignal ein rascher Eintritt auch der zur kürzesten erwarteten Relaxationszeit gehörigen Lumineszenzantwort in die Sättigung bewirkt wird. Beispielsweise kann der kürzeste verwendete Pulsabstand ein Zehntel der kürzesten erwarteten Relaxationszeit betragen.

**Figur 2** zeigt ein Anregungssignal 1 in Gestalt eines frequenzmodulierten Signals, wie es zur Anregung einer Lumineszenz einer Sensorsubstanz in dem erfindungsgemäßen Verfahren verwendet werden kann. Auf der Abszisse 2 ist die Zeit, auf der Ordinate 3 ein Maß für die Stärke des Anregungssignals 1, etwa die Intensität des Anregungssignals 1, aufgetragen. Über die Dauer des Anregungssignals 1 nimmt die Periodendauer 7 des hier sinusförmig gezeigten Anregungssignals 1 monoton ab, dementsprechend verringert sich der Abstand zwischen aufeinanderfolgenden Signalmaxima 8 des Anregungssignals 1. Der Abstand zwischen aufeinanderfolgenden Signalmaxima 8 des Anregungssignals 1 ist hier gleich der Periodendauer 7.

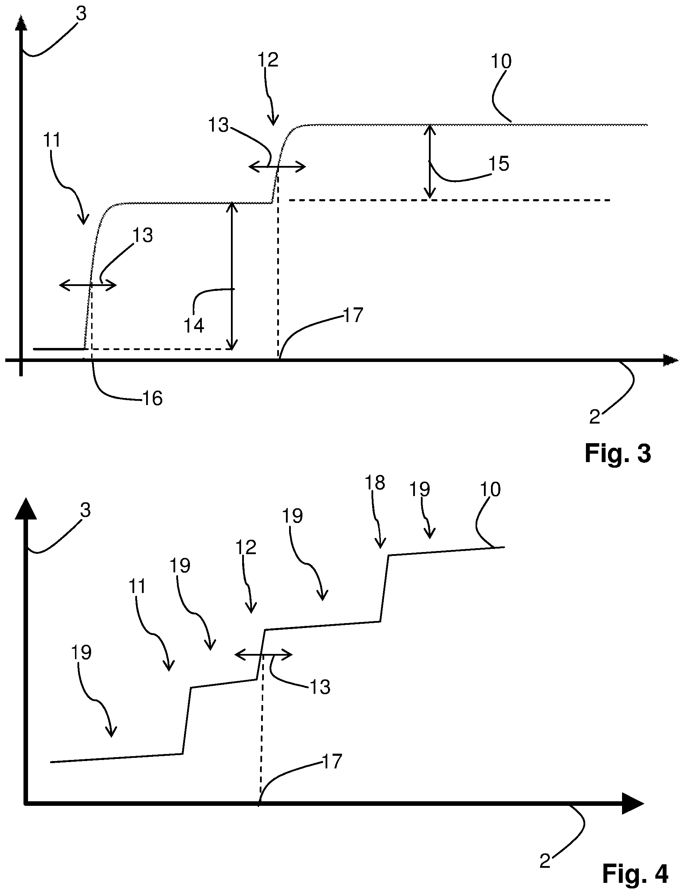

**Figur 3** zeigt den Zeitverlauf eines Ausgangssignals 10 bei Verwendung zweier Sensorsubstanzen, einer ersten Sensorsubstanz und einer zweiten Sensorsubstanz, in einer Probe, wobei die Sensorsubstanzen mit einem Anregungssignal entsprechend dem erfindungsgemäßen Verfahren zur Lumineszenz angeregt werden, wobei im Anregungssignal die zeitlichen Abstände zwischen aufeinanderfolgenden Signalmaxima abnehmen. Auf der Abszisse 2 ist die Zeit, auf der Ordinate 3 ein Maß für den Wert des Ausgangssignals 10 aufgetragen.

In dem Zeitverlauf des Ausgangssignals 10 sind eine erste Stufe 11 und eine zweite Stufe 12 erkennbar. In der ersten Stufe 11 erreicht die erste Sensorsubstanz eine Sättigung ihrer Lumineszenz, in der zweiten Stufe 12 erreicht die zweite Sensorsubstanz eine Sättigung ihrer Lumineszenz. Die Relaxationszeit der zweiten Sensorsubstanz ist im hier gezeigten Beispiel kürzer als die Relaxationszeit der ersten Sensorsubstanz.

Der Zeitpunkt 16, 17 des Auftretens einer Stufe 11, 12 hängt, bei gleichem Anregungssignal, von einer zu bestimmenden Veränderlichen der Probe ab, da die Relaxationszeiten der Sensorsubstanzen von der Veränderlichen abhängen; das heißt, die Lage einer Stufe 11, 12 auf der Abszisse 2 verschiebt sich je nach dem Wert der entsprechenden Veränderlichen. Dies ist durch die Doppelpfeile 13 angedeutet. Als Zeitpunkt 16 für das Auftreten der ersten Stufe 11, beziehungsweise als Zeitpunkt 17 für das Auftreten der zweiten Stufe 12, ist hier jeweils derjenige Zeitpunkt gewählt, bei dem die jeweilige Stufe 11, 12 die Hälfte ihrer Höhe 14, 15 erreicht hat. Andere Definitionen zur Festlegung des Zeitpunktes des Auftretens einer Stufe sind ebenso möglich. Hier ist darauf zu achten, dass für Kalibrierung und Messung identische Definitionen zur Festlegung des Zeitpunktes des Auftretens einer Stufe verwendet werden. Ferner ist der Zeitpunkt 16, 17 des Auftretens einer Stufe stets auf den Zeitverlauf des Anregungssignals bezogen, beispielsweise kann der Zeitpunkt des Einsetzens des Anregungssignals als Ursprung der Zeitachse gewählt werden, auf der auch der Zeitpunkt 16, 17 des Auftretens einer Stufe angegeben wird.

Die Höhe der im Ausgangssignal auftretenden Stufen kann durchaus verschieden sein. So ist im gezeigten Beispiel die Höhe 14 der ersten Stufe 11 größer als die Höhe 15 der zweiten Stufe 12.

In dem hier gezeigten Beispiel ist der Wert des Ausgangssignals 10 abseits der Stufen 11, 12 konstant. Wie oben bereits erläutert, ergibt sich dies bei kurzen Integrations-Zeitintervallen und schnellen Detektoren, also Detektoren mit kurzen Reaktionszeiten im Vergleich zum zeitlichen Abstand aufeinanderfolgender Signalmaxima des Anregungssignals.

**Figur 4** zeigt ein weiteres Beispiel für den Zeitverlauf eines Ausgangssignals 10. Der Zeitverlauf zeigt drei Stufen 11, 12, 18, sowie Bereiche 19 mit einem flacheren Anstieg des Ausgangssignals 10. Wie weiter oben erläutert, ergeben sich die Bereiche 19 mit flacherem Anstieg dadurch, dass bei monoton abnehmendem Abstand aufeinanderfolgender Signalmaxima des Anregungssignals 1 mehr und mehr Signalmaxima innerhalb eines Integrations-Zeitintervalls liegen. Indem man das Ausgangssignal 10 durch die Zahl der jeweils innerhalb eines Integrations-Zeitintervalls liegenden Signalmaxima, oder eine dazu proportionale Größe, dividiert, erhält man ein modifiziertes Ausgangssignal, welches in den Bereichen 19 zwischen den Stufen einen konstanten Wert aufweist.

Auch bei dem in Figur 4 gezeigten Verlauf des Ausgangssignals 10 können die Zeitpunkte des Auftretens der Stufen 11, 12, 18 ermittelt werden, analog zu dem in Figur 3 gezeigten Fall. Stellvertretend ist dies hier für die Stufe 12 mit zugehörigem Zeitpunkt 17 dargestellt.

Die Details des Verlaufs des Ausgangssignals 10 abseits der Stufen 11, 12, 18, und ebenso die genaue Form der Stufen 11, 12, 18 hängen von Einzelheiten des Messverfahrens ab, wie z.B. der Reaktionszeit des verwendeten Detektors und der Länge der Integrations-Zeitintervalle. Relevant für das erfindungsgemäße Verfahren ist hingegen das Auftreten der Stufen 11, 12, 18 und die Abhängigkeit des Zeitpunkts des Auftretens dieser Stufen von der zu bestimmenden Veränderlichen.

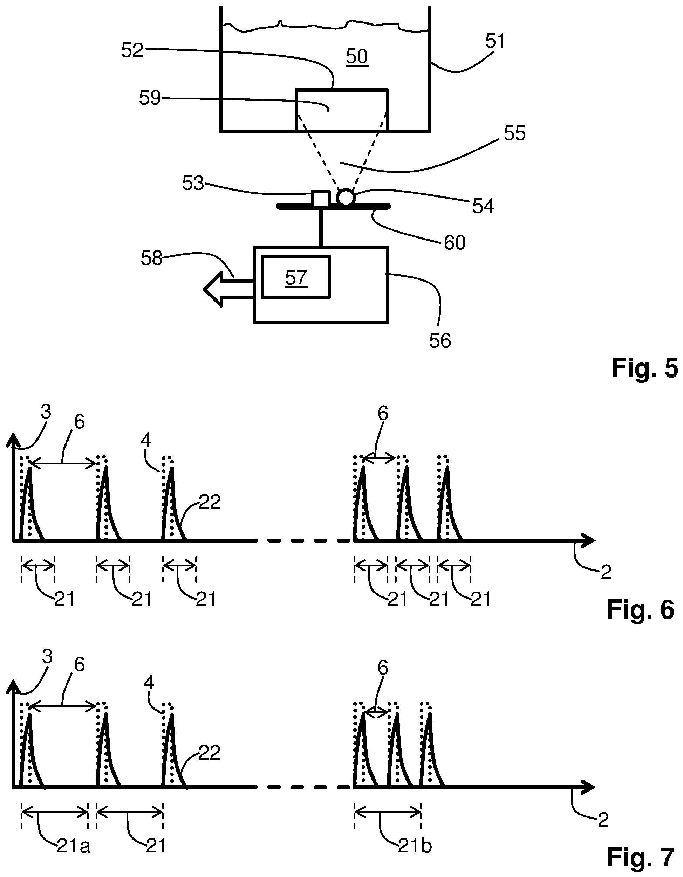

**Figur 5** zeigt eine Probe 50 in einem Probenbehälter 51. Im Probenbehälter 51 befindet sich ein Träger 52, welcher mit einer Sensorsubstanz 59 versehen ist, die in Kontakt mit der Probe 50 steht. Beispielsweise kann der Träger 52 mit der Sensorsubstanz 59 getränkt sein.

Außerhalb des Probenbehälters 51 befinden sich eine Fotodiode 53 und eine Lichtquelle 54, in der gezeigten Anordnung auf einer Platine 60. Die Lichtquelle 54, hier eine LED, emittiert ein elektromagnetisches Anregungssignal der oben beschriebenen Art in Form von Licht 55, um die Sensorsubstanz 59 zu Lumineszenz anzuregen. Die Fotodiode 53 empfängt Lumineszenzlicht von der Sensorsubstanz 59 und generiert daraus ein elektrisches Signal. Je nach Durchführung des Verfahrens und Reaktionszeit der Fotodiode 53 kann dieses elektrische Signal bereits das Ausgangssignal im Sinne dieser Anmeldung sein, oder eine Auswerteeinheit 56 erzeugt aus diesem elektrischen Signal das Ausgangssignal durch Integration über definierte Intervalle. Die Auswerteeinheit 56 ermittelt sodann die Zeitpunkte des Auftretens von Stufen im Ausgangssignal. Mit Hilfe von zuvor bereitgestellten Kalibrierdaten 57 bestimmt die Auswerteeinheit 56 sodann den Wert einer Veränderlichen der Probe 50. Der so bestimmte Wert der Veränderlichen der Probe 50 wird einer Ausgabe 58, etwa an einen Benutzer über ein Display oder an ein nachgeordnetes Datenverarbeitungssystem, zugeleitet. Die Lichtquelle 54 kann ebenfalls durch ein nachgeordnetes Datenverarbeitungssystem gesteuert werden, ebenso ist es etwa möglich, eine Steuerung für die Lichtquelle 54 in die Auswerteeinheit 56 zu integrieren.

Es sei betont, dass die Anordnung aus Lichtquelle 54 und Fotodiode 53 hier nur beispielhaft ist. Gleiches gilt für die Position des Trägers 52 innerhalb des Probenbehälters 51. In dem gezeigten Beispiel ist die Probe 50 flüssig, auch dies stellt keine Einschränkung der Erfindung dar. Ebenso können etwa gasförmige Proben untersucht werden.

**Figur 6** zeigt Integrations-Zeitintervalle 21, sowie Pulse 4 (gepunktet) eines Anregungssignals mit über die Dauer des Anregungssignals monoton abnehmenden Pulsabständen 6, analog der Figur 1. Ferner gezeigt ist die Lumineszenzantwort 22 zu jedem Puls 4. Während der Dauer eines Pulses 4 wächst die Lumineszenzantwort 22 an, nach dem Ende des jeweiligen Pulses 4 fällt die Lumineszenzantwort 22 ab. Auf der Abszisse 2 ist die Zeit, auf der Ordinate 3 ein Maß für die Stärke des Anregungssignals und der Lumineszenzantwort 22 aufgetragen. Die während der Dauer des Anregungssignals, also hier während der Folge von Pulsen 4, aufeinanderfolgenden Integrations-Zeitintervalle 21 haben eine konstante Länge, die hier so bemessen ist, dass innerhalb eines Integrations-Zeitintervalls 21 gerade eben Anstieg und Abfall der Lumineszenzantwort 22 zu einem Puls 4 erfolgen können. Die zeitliche Lage der Integrations-Zeitintervalle 21 ist hier mit den Pulsen 4 korreliert, genauer wird die Integration über die Lumineszenz-Antwort 22 durch einen jeweiligen Puls 4 ausgelöst. Die Integration der Lumineszenzantwort 22 über jedes dargestellte Integrations-Zeitintervall 21 ergibt im gezeigten Fall den gleichen Wert, auch wenn im späteren Verlauf des Anregungssignals, von der Anfangsphase des Anregungssignals durch einen gestrichelten Abszissenabschnitt getrennt, der Pulsabstand 6 gegenüber dem anfänglichen Wert deutlich verringert ist. Das durch die Ergebnisse der Integration über die einzelnen Integrations-Zeitintervalle 21 gebildete Ausgangssignal 10 (siehe Figuren 3 und 4) hat dann für den auf der Abszisse dargestellten Zeitabschnitt einen konstanten Wert. Damit ein weiterer Puls 4 und entsprechend eine zugehörige Lumineszenzantwort 22 innerhalb des Integrations-Zeitintervalls 21 zu dem vorausgehenden Puls 4 liegt, müsste der Pulsabstand 6 hier soweit verringert werden, dass ein vollständiges Abklingen der Lumineszenzantwort 22 innerhalb des Pulsabstandes 6 kaum mehr möglich ist. Dies ist aber der erste Schritt zur Ausbildung eines gesättigten Lumineszenzsignals, und damit der Übergang zu einer Stufe im Ausgangssignal 10.

**Figur 7** entspricht weitgehend der Figur 6, nur sind hier die Integrations-Zeitintervalle 21 länger als im Fall der Figur 6. Auch im Fall der Figur 7 hat jedes Integrations-Zeitintervall 21, 21a, 21b die gleiche Länge. Es kommt nun aber zu dem Fall, wie für das Integrations-Zeitintervall 21b dargestellt, dass innerhalb eines Pulsabstandes 6 zwar die Lumineszenzantwort 22 vollständig abklingen kann, aber bereits mehr als ein Puls 4 mit zugehöriger Lumineszenzantwort 22 innerhalb des Integrations-Zeitintervalls liegt. Im Integrations-Zeitintervall 21b liegen zwei Pulse 4 mit zugehöriger Lumineszenzantwort 22, im Integrations-Zeitintervall 21a liegt ein Puls 4 mit zugehöriger Lumineszenzantwort 22. Dementsprechend ergibt sich bei Integration über das Intervall 21b ein doppelt so großer Wert für das Ausgangssignal 10 wie bei Integration über das Intervall 21a. Der auf der Abszisse 2 in der Figur 7 dargestellte Zeitabschnitt entspricht somit einem Bereich 19 in der Figur 4, bei dem abseits einer Stufe 11, 12, 18 das Ausgangssignal 10 ansteigt. Auch in diesem Fall kann die Integration durch einen Puls 4 ausgelöst werden, jedoch nur durch einen Puls 4, der nicht in ein Zeitintervall für eine von einem der vorausgegangenen Pulse ausgelöste Integration fällt.

Die Dauer der Integrations-Zeitintervalle 21 ist vorgegeben, entweder ist sie explizit durch einen Anwender des erfindungsgemäßen Verfahrens oder durch die Auswahl der zur Erfassung der Lumineszenzantwort 22 verwendeten Detektoren über deren Reaktionszeit bestimmt.

## Patentansprüche

1. Verfahren zur Bestimmung einer Veränderlichen einer Probe (50), umfassend die Schritte:
a) Herstellen eines Kontakts zwischen mindestens einer Sensorsubstanz (59) und der Probe (50), wobei die mindestens eine Sensorsubstanz (59) ein Lumineszenzverhalten mit einer Relaxationszeit, die von der Veränderlichen abhängt, aufweist;
b) Anregen des Lumineszenzverhaltens der mindestens einen Sensorsubstanz (59) durch ein elektromagnetisches Anregungssignal (1), welches einen vorgegebenen Zeitverlauf mit aufeinanderfolgenden Signalmaxima (8) aufweist, wobei der zeitliche Abstand aufeinanderfolgender Signalmaxima (8) entweder monoton über die Dauer des Anregungssignals (1) abnimmt oder monoton über die Dauer des Anregungssignals (1) zunimmt;
c) Erzeugung eines zeitabhängigen Ausgangssignals (10) durch Integration eines Zeitverlaufs einer Lumineszenzantwort (22) der mindestens einen Sensorsubstanz (59) auf das Anregungssignal (1) über aufeinanderfolgende Zeitintervalle (21) während des Anregungssignals (1);
d) Bestimmen der Veränderlichen aus mindestens einem auf den Zeitverlauf des Anregungssignals (1) bezogenen Zeitpunkt (16, 17) des Auftretens einer Stufe (11, 12, 18) im Ausgangssignal (10).

2. Verfahren nach Anspruch 1, wobei zur Bestimmung des Zeitpunkts (16, 17) des Auftretens der Stufe (11, 12, 18) das Ausgangssignal (10) modifiziert wird, indem das Ausgangssignal (10) durch die Anzahl der Signalmaxima (8) innerhalb eines Zeitintervalls (21) für die Integration oder durch die in ein Zeitintervall (21) für die Integration fallende Energie des Anregungssignals (1) dividiert wird.

3. Verfahren nach Anspruch 1 oder 2, wobei das Anregungssignal (1) ein frequenzmoduliertes Signal ist, dessen Frequenz im Zeitverlauf zunimmt oder abnimmt.

4. Verfahren nach Anspruch 1 oder 2, wobei das Anregungssignal (1) eine Folge von Pulsen (4) ist, bei der Pulsabstände (6) während des Zeitverlaufs des Anregungssignals (1) abnehmen oder zunehmen.

5. Verfahren nach einem der vorstehenden Ansprüche, wobei die Bestimmung der Veränderlichen gemäß Schritt d unter Einbeziehung vorgegebener Kalibrierdaten (57) erfolgt.

6. Verfahren nach einem der Ansprüche 1 bis 5, wobei die mindestens eine Sensorsubstanz (59) mit der Probe (50) vermischt wird.

7. Verfahren nach einem der Ansprüche 1 bis 6, wobei ein mit mindestens einer der Sensorsubstanzen (59) versehener Träger (52) in die Probe (50) eingebracht wird.

8. Verfahren nach einem der vorstehenden Ansprüche, wobei mindestens zwei Sensorsubstanzen (59) mit der Probe (50) in Kontakt gebracht werden, und sich die Sensorsubstanzen (59) hinsichtlich einer Relaxationszeit ihres Lumineszenzverhaltens unterscheiden.

9. Verfahren nach einem der vorstehenden Ansprüche, wobei mindestens zwei Sensorsubstanzen (59) mit der Probe (50) in Kontakt gebracht werden, und sich die Sensorsubstanzen (59) hinsichtlich eines Wertebereichs der Veränderlichen unterscheiden, in dem sich eine Abhängigkeit des Lumineszenzverhaltens der jeweiligen Sensorsubstanz (59) von der Veränderlichen zeigt.

10. Verfahren nach einem der vorstehenden Ansprüche, wobei die Lumineszenzantwort aller im Kontakt mit der Probe (50) befindlichen Sensorsubstanzen (59) durch einen gemeinsamen Detektor erfasst wird.

11. Verfahren nach einem der Ansprüche 8 oder 9, wobei zur Erfassung der Lumineszenzantwort mehr als ein Detektor verwendet wird, und jeder Detektor die Lumineszenzantwort eines Teils der Sensorsubstanzen (59) erfasst.

12. Verfahren nach einem der Ansprüche 10 oder 11, wobei als Detektor eine Fotodiode (53) oder ein bildgebender optoelektronischer Sensor verwendet wird.

13. Verfahren nach einem der vorstehenden Ansprüche, wobei das Verfahren für eine Vielzahl von Proben (50) durchgeführt wird, indem die Schritte a, c, d für jede der Proben (50) separat erfolgen, und das Anregen der Sensorsubstanzen (59) aller Proben (50) nach Schritt b durch ein elektromagnetisches Anregungssignal (1) erfolgt, dem die Sensorsubstanzen (59) aller Proben (50) gemeinsam ausgesetzt werden.

14. Verfahren nach einem der vorstehenden Ansprüche, wobei die Schritte b und c wiederholt durchgeführt werden, und ein resultierender Wert der Veränderlichen durch Mittelung bestimmt wird.

15. Verfahren nach einem der vorstehenden Ansprüche, wobei die mindestens eine Veränderliche eine Konzentration eines Stoffes, ein Druck, eine Temperatur, ein Partialdruck eines Gases oder ein pH-Wert ist.

## Claims

1. Method for determining a variable of a sample (50), comprising the steps of:
a) establishing a contact between at least one sensor substance (59) and the sample (50), wherein the at least one sensor substance (59) exhibits a luminescence behavior with a relaxation time which depends on the variable;
b) exciting of the luminescence behavior of the at least one sensor substance (59) by an electromagnetic excitation signal (1) which has a predetermined temporal progression with successive signal maxima (8), wherein the time interval between successive signal maxima (8) either decreases monotonically over the duration of the excitation signal (1) or increases monotonically over the duration of the excitation signal (1);
c) generating a time-dependent output signal (10) by integrating a temporal progression of a luminescence response (22) of the at least one sensor substance (59) to the excitation signal (1) over successive time intervals (21) during the excitation signal (1);
d) determining the variable from at least one point in time (16, 17) of the occurrence of a step (11, 12, 18) in the output signal (10) related to the temporal progression of the excitation signal (1).

2. Method according to claim 1, wherein, to determine the point in time (16, 17) of the occurrence of the step (11, 12, 18), the output signal (10) is modified by dividing the output signal (10) by the number of signal maxima (8) within a time interval (21) for integration or by the energy of the excitation signal (1) falling within a time interval (21) for integration.

3. Method according to claim 1 or 2, wherein the excitation signal (1) is a frequency-modulated signal whose frequency increases or decreases over temporal progression.

4. Method according to claim 1 or 2, wherein the excitation signal (1) is a sequence of pulses (4) in which pulse intervals (6) decrease or increase during the temporal progression of the excitation signal (1).

5. Method according to one of the preceding claims, wherein the determination of the variable according to step d takes place with the inclusion of predetermined calibration data (57).

6. Method according to one of claims 1 to 5, wherein the at least one sensor substance (59) is mixed with the sample (50).

7. Method according to one of claims 1 to 6, wherein a carrier (52) provided with at least one of the sensor substances (59) is introduced into the sample (50).

8. Method according to one of the preceding claims, wherein at least two sensor substances (59) are brought into contact with the sample (50), and the sensor substances (59) differ with respect to a relaxation time of their luminescence behavior.

9. Method according to one of the preceding claims, wherein at least two sensor substances (59) are brought into contact with the sample (50), and the sensor substances (59) differ with respect to a value range of the variable, in which a dependence of the luminescence behavior of the respective sensor substance (59) on the variable is shown.

10. Method according to one of the preceding claims, wherein the luminescence response of all sensor substances (59) in contact with the sample (50) is detected by a common detector.

11. Method according to one of the claims 8 or 9, wherein more than one detector is used to detect the luminescence response, and each detector detects the luminescence response of a part of the sensor substances (59).

12. Method according to one of claims 10 or 11, wherein a photodiode (53) or an imaging optoelectronic sensor is used as a detector.

13. Method according to one of the preceding claims, wherein the method is carried out for a plurality of samples (50) by carrying out steps a, c, d separately for each of the samples (50), and the excitation of the sensor substances (59) of all samples (50) according to step b is carried out by an electromagnetic excitation signal (1) to which the sensor substances (59) of all samples (50) are exposed in common.

14. Method according to one of the preceding claims, wherein steps b and c are repeatedly performed, and a resultant value of the variable is determined by averaging.

15. Method according to one of the preceding claims, wherein the at least one variable is a concentration of a substance, a pressure, a temperature, a partial pressure of a gas or a pH value.

## Revendications

1. Procédé pour la détermination d'une variable d'un échantillon (50), comprenant les étapes suivantes :
a) établissement d'un contact entre au moins une substance de détection (59) et l'échantillon (50), l'au moins une substance de détection (59) ayant un comportement de luminescence dont le temps de relaxation dépend de la variable ;
b) excitation du comportement de luminescence de l'au moins une substance de détection (59) par un signal d'excitation électromagnétique (1) qui présente une évolution prédéterminée dans le temps avec des maxima de signal (8) successifs, l'intervalle de temps entre des maxima de signal (8) successifs diminuant de façon uniforme sur la durée du signal d'excitation (1) ou augmentant de façon uniforme sur la durée du signal d'excitation (1) ;
c) génération d'un signal de sortie dépendant du temps (10) par intégration d'une évolution dans le temps d'une réponse de luminescence (22) de l'au moins une substance de détection (59) au signal d'excitation (1) sur des intervalles de temps (21) successifs pendant le signal d'excitation (1) ;
d) détermination de la variable à partir d'au moins un instant (16, 17), rapporté à l'évolution dans le temps du signal d'excitation (1), d'apparition d'un gradin (11, 12, 18) dans le signal de sortie (10).

2. Procédé selon la revendication 1 dans lequel, en vue de la détermination de l'instant (16, 17) d'apparition du gradin (11, 12, 18), le signal de sortie (10) est modifié par division du signal de sortie (10) par le nombre de maxima de signal (8) dans un intervalle de temps (21) pour l'intégration ou par l'énergie en diminution du signal d'excitation (1) sur l'intervalle de temps (21) pour l'intégration.

3. Procédé selon la revendication 1 ou 2, dans lequel le signal d'excitation (1) est un signal modulé en fréquence dont la fréquence augmente ou diminue au cours de l'évolution dans le temps.

4. Procédé selon la revendication 1 ou 2, dans lequel le signal d'excitation (1) est une suite d'impulsions (4) dans laquelle les écarts entre les impulsions (6) diminuent ou augmentent pendant l'évolution dans le temps du signal d'excitation (1).

5. Procédé selon l'une des revendications précédentes, dans lequel la détermination de la variable selon l'étape d) est effectuée en prenant en compte des données d'étalonnage (57) prédéterminées.

6. Procédé selon l'une des revendications 1 à 5, dans lequel l'au moins une substance de détection (59) est mélangée à l'échantillon (50).

7. Procédé selon l'une des revendications 1 à 6, dans lequel un support (52) doté d'au moins une des substances de détection (59) est introduit dans l'échantillon (50).

8. Procédé selon l'une des revendications précédentes, dans lequel au moins deux substances de détection (59) sont mises en contact avec l'échantillon (50) et les substances de détection (59) diffèrent par le temps de relaxation de leur comportement de luminescence.

9. Procédé selon l'une des revendications précédentes, dans lequel au moins deux substances de détection (59) sont mises en contact avec l'échantillon (50) et les substances de détection (59) diffèrent par la plage de valeurs de la variable dans laquelle se manifeste une dépendance du comportement de luminescence de chaque substance de détection (59) vis-à-vis de la variable.

10. Procédé selon l'une des revendications précédentes, dans lequel la réponse en luminescence de toutes les substances de détection (59) en contact avec l'échantillon (50) est captée par un détecteur commun.

11. Procédé selon l'une des revendications 8 ou 9, dans lequel plus d'un détecteur est utilisé pour capter la réponse en luminescence et chaque détecteur capte la réponse en luminescence d'une partie des substances de détection (59).

12. Procédé selon l'une des revendications 10 ou 11, dans lequel une photodiode (53) ou un capteur optoélectronique d'imagerie est utilisé comme détecteur.

13. Procédé selon l'une des revendications précédentes, dans lequel le procédé est exécuté pour une pluralité d'échantillons (50) par le fait que les étapes a), c), d) sont exécutées séparément pour chacun des échantillons (50), et l'excitation des substances de détection (59) de tous les échantillons (50) est réalisée après l'étape b) à l'aide d'un signal d'excitation (1) électromagnétique auquel les substances de détection (59) de tous les échantillons (50) sont exposées ensemble.

14. Procédé selon l'une des revendications précédentes, dans lequel les étapes b) et c) sont exécutées de façon répétée et une valeur résultante de la variable est déterminée par le calcul de la moyenne.

15. Procédé selon l'une des revendications précédentes, dans lequel l'au moins une variable est une concentration d'une substance, une pression, une température, une pression partielle d'un gaz ou un pH.
